# EUROPÄISCHE PATENTSCHRIFT

(11) **EP 1 405 389 B1**
(45) Veröffentlichungstag und Bekanntmachung des Hinweises auf die Patenterteilung: **01.09.2010**
(21) Anmeldenummer: 02701231.9
(22) Anmeldetag: 25.01.2002
(51) Int. Cl.: H02K 21/22, H02K 1/02

(54) **PERMANENTMAGNETERREGTE TRANSVERSALFLUSSMASCHINE**
PERMANENT MAGNET TRANSVERSAL FLUX MACHINE
MACHINE A FLUX TRANSVERSAL EXCITEE PAR AIMANT PERMANENT

(30) Priorität: 26.06.2001 DE 10130702
(43) Veröffentlichungstag der Anmeldung: 07.04.2004
(73) Patentinhaber: ROBERT BOSCH GMBH, 70442 Stuttgart (DE)
(72) Erfinder: KASTINGER, Guenter, 76571 Gaggenau-Sulzbach (DE)
(86) Internationale Anmeldenummer: PCT/DE2002/000247
(87) Internationale Veröffentlichungsnummer: WO 2003/003548

(56) Entgegenhaltungen:
- EP-A- 0 419 124
- DE-A- 4 035 767
- DE-A- 19 833 021
- DE-A- 19 926 920
- US-A- 5 677 580

## Beschreibung

### Stand der Technik

Die Erfindung geht aus von einer permanentmagneterregten Transversalflußmaschine nach dem Oberbegriff des Anspruchs 1.

Bei einer bekannten, als Außenläufermaschine konzipierten Transversalflußmaschine dieser Art (DE 43 14 513 A1) ist zur Erhöhung der Kraftdichte eine Kombination von Flächenmagneten in flacher Anordnung parallel zum Luftspalt mit in Drehrichtung alternierender Polarität und sog. Sammlermagneten vorgesehen, die zwischen den Flachmagneten in Radialrichtung ebenfalls mit in Drehrichtung alternierender Polarität angeordnet sind. Der Stator ist aus einzelnen, äquidistant angeordneten, U-förmigen Jochen gebildet, deren Jochschenkel die beiden Reihen von Statorpolen bilden, die den Flachmagneten des Rotors unter Bildung zweier axial beabstandeter, ringförmiger Luftspalte gegenüberliegen. Die Anzahl der Statorpole in jeder Statorpolreihe ist halb so groß wie die Anzahl der diesen gegenüberliegenden Flachmagnete. Die Statorpole in der einen Statorpolreihe sind gegenüber den Statorpolen der anderen Statorpolreihe um eine halbe Polteilung versetzt angeordnet.

Bei einer ebenfalls bekannten, als Außenläufermaschine konzipierten, zweisträngigen Synchronmaschine mit permanentmagnetischer Erregung im Außenrotor und transversaler Flußführung (DE 199 26 920 A1) trägt der Stator auf einem Eisenkern zwei voneinander beabstandete, gleich ausgebildete Polscheiben mit Statorpolen, wobei die Polscheiben um 90° elektrisch gegeneinander verschoben sind, und mittig zwischen den Polscheiben eine Scheibe für die Flußführung. Zwischen der mittleren Scheibe und den Polscheiben ist jeweils eine Statorwicklung auf dem Eisenkern aufgewickelt. Der Außenrotor weist eine Vielzahl von sich axial erstreckenden, balkenförmigen Flußleitern auf, deren Anzahl doppelt so groß ist wie die Anzahl der Statorpole auf einer Polscheibe. Auf die Flußleiter sind Permanentmagnete so aufgeklebt, daß jeweils eine Reihe von Permanentmagneten den Statorpolen einer Polscheibe unter Bildung eines Luftspalts gegenüberliegt. Im Bereich der Permanentmagnete sind die Flußleiter außen von je einem Eisenring umschlossen. Mittig ist auf die Flußleiter ein der mittleren Scheibe unter Belassung eines glatten, zylindrischen Luftspalts gegenüberliegender Ring aus ferromagnetischem Material aufgesetzt. Die Flußleiter sind in Axialnuten eines Profilrohrs eingebettet.

Die Dokumente DE 4035767, EP 0419 124 und US 5 677 580 offenbaren weitere elektrische Maschinen gemäß dem Stand der Technik.

### Vorteile der Erfindung

Die erfindungsgemäße permanentmagneterregte Transversalflußmaschine mit den Merkmalen des Anspruchs 1 hat den Vorteil, daß durch den einteiligen, massiven Statorkörper, der gemäß einer bevorzugten Ausführungsform der Erfindung als Eisenpulverpreßteil mit beim Herstellungsprozeß angeformten Statorpolen und eingeformter Ringnut ausgeführt wird, eine kostengünstige Fertigung der Maschine erreicht wird. In der Ausführung der Maschine als Außenläufermaschine kann die Statorwicklung direkt in die Ringnut eingewickelt werden und benötigt keinen gesonderten Wicklungsträger, so daß weitere Fertigungskosten eingespart werden. Trotz des massiven Statorkörpers wird durch dessen gute magnetische Leitfähigkeit in den drei Hauptrichtungen bei noch akzeptablen Wirbelstromverlusten in der Maschine eine hohe Kraftdichte erreicht und durch die in zwei Reihen unter Bildung zweier Luftspalte angeordneten Permanentmagnete, deren Polarität in Drehrichtung alterniert, eine hohe Drehmomentausbeute erzielt. In ihrer Verwendung als Antriebsmotor bietet die erfindungsgemäße Transversalflußmaschine eine ähnlich gute Antriebsleistung wie bürstenlose, elektronisch kommutierte Gleichstrommotoren, die heute im Kraftfahrzeugbau nahezu ausnahmslos verwendet werden. Selbst in der zum definierten Anlauf erforderlichen zweisträngigen Ausführung der erfindungsgemäßen Transversalflußmaschine baut diese noch relativ klein und ist somit gut für Stellantriebe im Kraftfahrzeug geeignet.

Durch die in den weiteren Ansprüchen aufgeführten Maßnahmen sind vorteilhafte Weiterbildungen und Verbesserungen der im

Anspruch 1 angegebenen permanentmagneterregten Transversalflußmaschine möglich.

### Zeichnung

Die Erfindung ist anhand eines in der Zeichnung dargestellten Ausführungsbeispiels in der nachfolgenden Beschreibung näher erläutert. Es zeigen schematisiert in perspektivischer Darstellung:
- Fig. 1: eine Ansicht von Stator und Rotor einer 32- poligen Transversalflußmaschine,
- Fig. 2: ausschnittweise eine Draufsicht in Richtung Pfeil II in Fig. 1,
- Fig. 3: ausschnittweise eine Unteransicht in Richtung Pfeil III in Fig. 1,
- Fig. 4: ausschnittweise eine Draufsicht auf Stator und Rotor einer modifizierten 32-poligen Transversalflußmaschine.

### Beschreibung des Ausführungsbeispiels

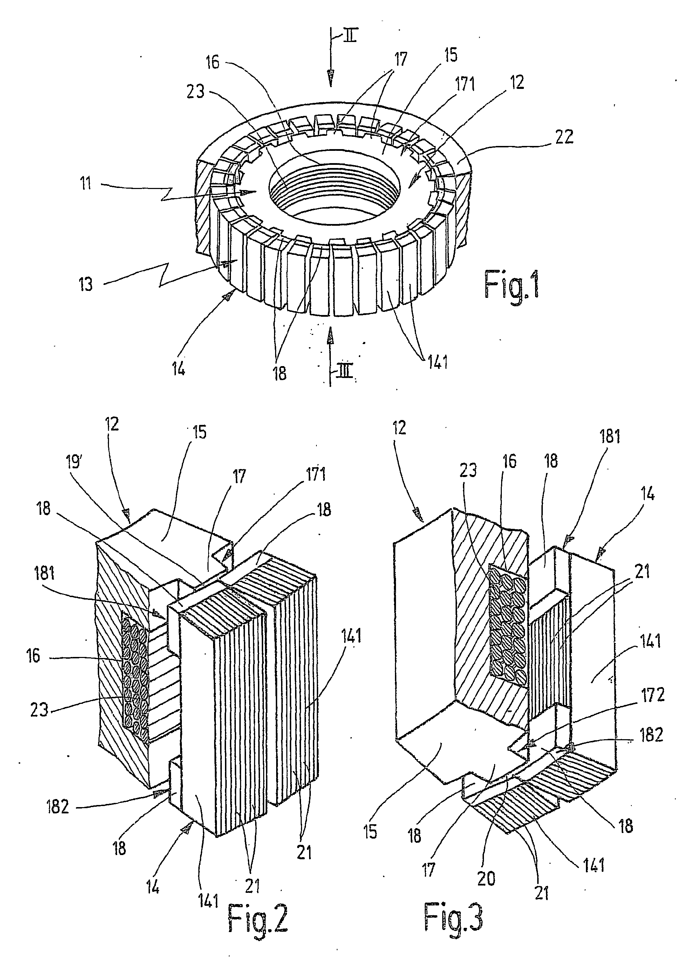

Die in Fig. 1 schematisch skizzierte, permanentmagneterregte Transversalflußmaschine weist einen Stator 11 mit einem Statormodul 12 und einen Rotor 13 mit einem Rotormodul 14 auf. Die hier als Außenläufermaschine einsträngig ausgeführte Transversalflußmaschine weist im Stator 11 nur ein einziges Statormodul 12 und im Rotor 13 ein einziges, das Statormodul 12 konzentrisch umschließendes Rotormodul 14 auf. Bei einer zweisträngigen Ausführung der Transversalflußmaschine, die für den selbsttätigen Anlauf der Transversalflußmaschine erforderlich ist, sind im Stator 11 zwei identische Statormodule 12 und im Rotor 13 zwei identische Rotormodule 14 vorhanden, wobei entweder das eine Statormodul 12 um 90° elektrisch gegenüber dem anderen Statormodul 12 verdreht axial neben dem anderen Statormodul angeordnet ist oder das eine Rotormodul 14 um 90° elektrisch gegen das andere Rotormodul 14 verdreht mit dem anderen Rotormodul 14 auf einer gemeinsamen Welle drehfest angeordnet ist. Für eine m-strängige Transversalflußmaschine mit m > 2 gilt allgemein, daß Stator- oder Rotormodule 12, 14 um einen elektrischen Winkel von 360°/m elektrisch gegeneinander verdreht sind.

Das Statormodul 12 weist einen einstückigen, massiven Statorkörper 15 mit einer in drei Hauptrichtungen guten magnetischen Leitfähigkeit auf. Der Statorkörper 15 ist mit einer mittig umlaufenden Ringnut 16 und ober- und unterhalb der Ringnut 16 mit radial vorstehenden Statorpolen 17 versehen. Dadurch ist oberhalb der Ringnut 16 eine obere Reihe 171 von Statorpolen 17 (Fig. 1 und 2) und unterhalb der Ringnut 16 eine untere Reihe 172 von Statorpolen 17 (Fig. 3) vorhanden. In jeder Reihe 171 bzw. 172 sind die Statorpole 17 um eine gleiche Polteilung zueinander versetzt am Umfang des Statorkörper 15 angeordnet. Bei der in Fig. 1 dargestellten 32-poligen Ausführung der Transversalflußmaschine sind in jeder Reihe 171 bzw. 172 sechzehn Statorpole 17 vorhanden. Der Statorkörper 15 wird als Einsenpulverpreßteil hergestellt, wobei beim Fertigungsprozeß die Statorpole 17 gleich mit angeformt werden und die Ringnut 16 gleich mit eingeformt wird. Das Eisenpulverpreßteil besteht aus einem sog. SMC (Soft Magnetic Composite)-Material mit einer möglichst großen relativen Permeabilität.

Das koaxial zum Statormodul 12 angeordnete, außenliegende Rotormodul 14 weist zwei Reihen 181, 182 von Permanentmagneten 18 auf, die in jeder Reihe 181, 182 um eine gegenüber der Statorpolteilung halbierte Teilung in Umfangsrichtung versetzt am Rotormodul 14 mit aufeinanderfolgend alternierender magnetischer Polarität angeordnet sind. Damit sind in jeder Reihe 181, 182 zweiunddreißig Permanentmagnete 18 vorhanden, die den sechzehn Statorpolen 17 in jeder Reihe 171, 172 unter Bildung eines ringförmigen Luftspalts 19 bzw. 20 gegenüberliegen (vgl. Fig. 2 und 3).

Die Permanentmagnete 18 sind in Form von Flachmagneten auf das Rotormodul 14 aufgeklebt, wobei immer ein Permanentmagnet 18 aus der oberen Reihe 181 und ein Permanentmagnet 18 aus der unteren Reihe 182 auf einem Modulsegment 141 sitzen. Die beiden Permanentmagnete 18 eines Modulsegments 141 sind radial gegensinnig aufmagnetisiert, so daß sich in jedem Modulsegment 141 ein Magnetfluß von dem einen zum anderen Flachmagneten ausbildet, der sich über die Luftspalte 19, 20 und den Statorkörper 15 schließt. Jedes Modulsegment 141 besteht aus einem Paket von in Umfangsrichtung aneinanderliegenden, rechteckigen Lamellen 21 aus ferromagnetischem Material. Die einzelnen Lamellenpakete sind in einem Träger 22 aus magnetisch nicht leitendem Material, z.B. Kunststoff, aufgenommen (Fig. 1). Der Kunststoffträger 22 ist mit einer hier nicht dargestellten, in einem Maschinengehäuse drehgelagerten Welle fest verbunden.

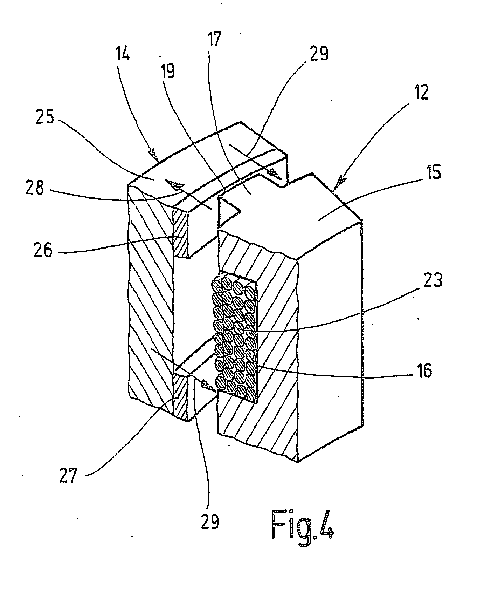

In einer in Fig. 4 perspektivisch, ausschnittweise dargestellten, modifizierten Ausführungsform der Transversalflußmaschine ist das Rotormodul 14 nicht aus einzelnen, von Lamellenpaketen gebildeten Modulsegmenten 141 zusammengesetzt, sondern - ebenso wie das Statormodul 12 - als ein massiver, hohlzylindrischer Rotorkörper 25 mit einer in drei Hauptrichtungen guten magnetischen Leitfähigkeit ausgebildet. Der Rotorkörper 25 ist ebenfalls aus SMC-Material gefertigt. Jede Reihe von Permanentmagneten ist hier durch einen Permanentmagnetring 26 bzw. 27 realisiert, der 32-polig radial mit alternierender Polarisations- bzw. Magnetisierungsrichtung aufmagnetisiert ist. Die wechselnde Polarität der in Umfangsrichtung aufeinanderfolgenden Permanentmangetpole ist in Fig. 4 durch die Pfeile 28 und 29 symbolisiert. Sich in Achsrichtung gegenüberliegende Permanentmagnetpole 28 ,29 in den beiden Permanentmangetringen 26, 27 weisen wiederum gegensinnige Polarität auf. Alternativ können anstelle der Permanentmagnetringe 26, 27 auch - wie in dem Ausführungsbeispiel der Fig. 1 - 3 - Flachmagnete verwendet werden, die dann in der in Fig. 1 - 3 gezeigten Reihung auf die Innenwand des Rotorkörpers 25 aufgeklebt werden.

## Patentansprüche

1. Permanentmagneterregte Transversalflußmaschine mit einem Stator (11), der mindestens ein Statormodul (12) mit einem eine mittig umlaufende Ringnut (16) und zwei voneinander axial beabstandete, parallele Reihen (171, 172) von in Umfangsrichtung mit konstanter Polteilung versetzt angeordneten, ober- und unterhalb der Ringnut (16) radial abstehenden Statorpolen (17) tragenden Statorkörper (15) sowie mit einer in der Ringnut (16) einliegenden, ringförmigen Statorwicklung (23) aufweist, und mit einem Rotor (13), der mindestens ein zum Statormodul (12) koaxial angeordnetes Rotormodul (14) mit zwei den Statorpolreihen (171, 172) unter Bildung zweier ringförmiger Luftspalte (19, 20) gegenüberliegenden Reihen von Rotorpolen aufweist, die am Rotormodul (14) um eine gegenüber der Statorpolteilung halbierte Rotorpolteilung in Umfangsrichtung versetzt mit aufeinanderfolgend alternierender magnetischer Polarität angeordnet sind, **dadurch gekennzeichnet, daß** der Statorkörper (15) einstückig und massiv ist und eine in drei Hauptrichtungen gute magnetische Leitfähigkeit aufweist und daß die Rotorpole von radial magnetisierten Permanentmagneten (18) gebildet sind, deren Anordnung so getroffen ist, daß die Permanentmagnete (18) der einen Reihe den Permanentmagneten (18) der anderen Reihe in Achsrichtung gegenüberliegen und die in Achsrichtung einander gegenüberliegenden Permanentmagnete (18) radial gegensinnig aufmagnetisiert sind.

2. Maschine nach Anspruch 1, **dadurch gekennzeichnet, daß** der Statorkörper (15) als Eisenpulverpreßteil mit beim Fertigungsprozeß angeformten Statorpolen (17) und eingeformter Ringnut (16) hergestellt ist.

3. Maschine nach Anspruch 2, **dadurch gekennzeichnet, daß** das Eisenpulverpreßteil aus SMC(Soft Magnetic Composite)-Material mit möglichst großer relativer Permeabilität besteht.

4. Maschine nach einem der Ansprüche 1 - 3, **dadurch gekennzeichnet, daß** das Rotormodul (14) aus einer Vielzahl von jeweils zwei axial beabstandete Permanentmagnete (18) mit entgegengesetzter magnetischer Polarität tragenden Modulsegmenten (141) zusammengesetzt ist, und daß jedes Modulsegment (141) aus einem Paket von in Umfangsrichtung aneinanderliegenden Lamellen (21) aus ferromagnetischem Material besteht.

5. Maschine nach Anspruch 4, **dadurch gekennzeichnet, daß** die Lamellen (21) rechteckförmig sind.

6. Maschine nach Anspruch 4 oder 5, **dadurch gekennzeichnet, daß** die Modulsegmente (141) in einem Träger (22) aus magnetisch nicht leitendem Material, z. B. Kunststoff, aufgenommen sind.

7. Maschine nach einem der Ansprüche 1 - 3, **dadurch gekennzeichnet, daß** das Rotormodul (14) von einem massiven, zylindrischen Rotorkörper mit einer in drei Hauptrichtungen guten magnetischen Leitfähigkeit gebildet ist.

8. Maschine nach einem der Ansprüche 1 - 7, **dadurch gekennzeichnet, daß** das mindesten eine Rotormodul (14) das mindestens eine Statormodul (12) außen umschließt.

9. Maschine nach Anspruch 8, **dadurch gekennzeichnet, daß** die Statorwicklung (23) direkt auf den Statorkörper (15) aufgewickelt ist.

10. Maschine nach einem der Ansprüche 1 - 9, **dadurch gekennzeichnet, daß** die Permanentmagnete (13) als Flachmagnete ausgebildet sind, die auf dem Rotormodul (14) aufgeklebt sind.

11. Maschine nach einem der Ansprüche 1 - 9, **dadurch gekennzeichnet, daß** jede Reihe von Permanentmagneten von einem Permanentmagnetring (27, 28) gebildet ist, der in Umfangsrichtung hochpolig mit alternierender Polarisationsrichtung radial aufmagnetisiert ist.

12. Maschine nach einem der Ansprüche 1 - 11, **dadurch gekennzeichnet, daß** mindestens zwei Statormodule (12) und mindestens zwei Rotormodule (14) axial nebeneinander angeordnet und entweder die Statormodule (12) oder die Rotormodule (14) in Umfangsrichtung gegeneinander verdreht sind, wobei der Verdrehwinkel bei zwei Stator- und Rotormodulen (12, 14) 90° elektrisch und bei m Statormodulen (12) und m Rotormodulen (14) mit m > 2 360°/m elektrisch beträgt.

## Claims

1. Transverse flux machine with permanent-magnet excitation, having a stator (11) which has at least one stator module (12) with a centrally circumferential annular groove (16) and two parallel rows (171, 172), which are axially spaced apart from one another, of stator bodies (15) which are fitted with radially projecting stator poles (17) above and below the annular groove (16) and are arranged offset in the circumferential direction with a constant pole pitch, and also with an annular stator winding (23) which is situated in the annular groove (16), and having a rotor (13) which has at least one rotor module (14) which is arranged coaxially in relation to the stator module (12) and has two rows of rotor poles which are situated opposite the stator pole rows (171, 172) so as to form two annular air gaps (19, 20), said rotor poles being arranged on the rotor module (14) by a rotor pole pitch which is half the stator pole pitch and offset in the circumferential direction with successively alternating magnetic polarity, **characterized in that** the stator body (15) is integral and solid and exhibits good magnetic permeability in three main directions, and **in that** the rotor poles are formed by radially magnetized permanent magnets (18), the said permanent magnets being arranged such that the permanent magnets (18) of the other row are situated opposite in the axial direction and the permanent magnets (18) which are situated opposite one another in the axial direction are magnetized in the radially opposite direction.

2. Machine according to Claim 1, **characterized in that** the stator body (15) is produced as a compressed iron powder part with stator poles (17) which are integrally formed during the manufacturing process and with an annular groove (16) which is moulded-in during the said manufacturing process.

3. Machine according to Claim 2, **characterized in that** the compressed iron powder part is composed of SMC (Soft Magnetic Composite) material with the greatest possible relative permeability.

4. Machine according to one of Claims 1-3, **characterized in that** the rotor module (14) is composed of a large number of module segments (141) which are fitted with in each case two permanent magnets (18) which are axially spaced apart and have opposite magnetic polarity, and **in that** each module segment (141) comprises a core of laminations (21) which are composed of ferromagnetic material and rest one on the other in the circumferential direction.

5. Machine according to Claim 4, **characterized in that** the laminations (21) are rectangular.

6. Machine according to Claim 4 or 5, **characterized in that** the module segments (141) are accommodated in a carrier (22) which is composed of a magnetically impermeable material, for example plastic.

7. Machine according to one of Claims 1-3, **characterized in that** the rotor module (14) is formed by a solid, cylindrical rotor body with good magnetic permeability in three main directions.

8. Machine according to one of Claims 1-7, **characterized in that** the at least one rotor module (14) surrounds the outside of the at least one stator module (12).

9. Machine according to Claim 8, **characterized in that** the stator winding (23) is wound directly onto the stator body (15).

10. Machine according to one of Claims 1-9, **characterized in that** the permanent magnets (13) are in the form of flat magnets which are adhesively bonded on the rotor module (14).

11. Machine according to one of Claims 1-9, **characterized in that** each row of permanent magnets is formed by a permanent magnet ring (27, 28) which is radially magnetized in the circumferential direction with an alternating direction of polarization with multiple poles.

12. Machine according to one of Claims 1-11, **characterized in that** at least two stator modules (12) and at least two rotor modules (14) are arranged axially next to one another and either the stator modules (12) or the rotor modules (14) are rotated relative to one another in the circumferential direction, with the angle of rotation being 90° electrical when there are two stator and rotor modules (12, 14), and being 360°/m electrical when there are m stator modules (12) and m rotor modules (14), where m > 2.

## Revendications

1. Machine à flux transversal excitée par aimant permanent, comprenant un stator (11) qui présente au moins un module de stator (12) avec un corps de stator (15) portant une rainure annulaire (16) s'étendant circonférentiellement centralement et deux rangées parallèles espacées axialement l'une de l'autre (171, 172) de pôles statoriques (17) disposés de manière décalée avec une division de pôles constante dans la direction périphérique, saillant radialement au-dessus et en dessous de la rainure annulaire (16), ainsi qu'avec un enroulement statorique (23) de forme annulaire, s'ajustant dans la rainure annulaire (16), et comprenant un rotor (13) qui présente au moins un module de rotor (14) disposé coaxialement par rapport au module de stator (12) avec deux rangées de pôles de rotor opposées aux rangées de pôles statoriques (171, 172) en formant deux entrefers annulaires (19, 20), qui sont disposées sur le module de rotor (14) de manière décalée dans la direction périphérique d'une division de pôles de rotor moitié celle de la division de pôles statoriques, avec une inversion successive de polarité magnétique, **caractérisée en ce que** le corps de stator (15) est réalisé d'une seule pièce et est massif et présente une bonne conductibilité magnétique dans trois directions principales, et **en ce que** les pôles de rotor sont formés par des aimants permanents (18) aimantés radialement, dont l'agencement est tel que les aimants permanents (18) d'une rangée soient opposés aux aimants permanents (18) de l'autre rangée dans la direction axiale et que les aimants permanents (18) opposés les uns aux autres dans la direction axiale soient aimantés radialement en sens inverse.

2. Machine selon la revendication 1, **caractérisée en ce que** le corps de stator (15) est fabriqué sous forme de pièce en poudre de fer pressée avec des pôles statoriques (17) façonnés lors du processus de fabrication et une rainure (16) moulée.

3. Machine selon la revendication 2, **caractérisée en ce que** la pièce en poudre de fer pressée se compose de matériau SMC (Soft Magnetic Composite) avec une perméabilité relative aussi élevée que possible.

4. Machine selon l'une quelconque des revendications 1 à 3, **caractérisée en ce que** le module de rotor (14) se compose d'une pluralité de segments modulaires (141) portant à chaque fois deux aimants permanents espacés axialement (18) avec une polarité magnétique opposée et **en ce que** chaque segment modulaire (141) se compose d'un paquet de lamelles (21) en matériau ferromagnétique disposées les unes contres les autres dans la direction périphérique.

5. Machine selon la revendication 4, **caractérisée en ce que** les lamelles (21) sont rectangulaires.

6. Machine selon la revendication 4 ou 5, **caractérisée en ce que** les segments modulaires (141) sont reçus dans un support (22) en matériau non conducteur magnétique, par exemple du plastique.

7. Machine selon l'une quelconque des revendications 1 à 3, **caractérisée en ce que** le module de rotor (14) est formé par un corps de rotor cylindrique massif, avec une bonne conductibilité magnétique dans trois directions principales.

8. Machine selon l'une quelconque des revendications 1 à 7, **caractérisée en ce que** l'au moins un module de rotor (14) entoure l'au moins un module de stator (12) à l'extérieur.

9. Machine selon la revendication 8, **caractérisée en ce que** l'enroulement statorique (23) est enroulé directement sur le corps de stator (15).

10. Machine selon l'une quelconque des revendications 1 à 9, **caractérisée en ce que** les aimants permanents (13) sont réalisés sous forme d'aimants plats, qui sont collés sur le module de rotor (14).

11. Machine selon l'une quelconque des revendications 1 à 9, **caractérisée en ce que** chaque rangée d'aimants permanents est formée par une bague d'aimants permanents (27, 28), qui est magnétisée radialement dans la direction périphérique sous forme multipôles avec un sens de polarisation alterné.

12. Machine selon l'une quelconque des revendications 1 à 11, **caractérisée en ce qu'**au moins deux modules de stator (12) et au moins deux modules de rotor (14) sont disposés axialement l'un à côté de l'autre et soit les modules de stator (12) soit les modules de rotor (14) sont tournés l'un par rapport à l'autre dans la direction périphérique, l'angle de rotation dans le cas de deux modules de stator et de rotor (12, 14) étant de 90° électriquement et pour m modules de stator (12) et m modules de rotor (14), avec m > 2, étant de 360°/m électriquement.
